# FASCICULE DE BREVET EUROPEEN

(11) **EP 3 289 255 B1**
(45) Date de publication et mention de la délivrance du brevet: **03.07.2019**
(21) Numéro de dépôt: 16733120.6
(22) Date de dépôt: 31.03.2016
(51) Int. Cl.: F16F 1/08

(54) **VALVE SOUMISE À DES ENVIRONNEMENTS SOUS PRESSION**
VENTIL FÜR UNTER DRUCK STEHENDE UMGEBUNGEN
VALVE FOR PRESSURISED ENVIRONMENTS

(30) Priorité: 30.04.2015 FR 1553945
(43) Date de publication de la demande: 07.03.2018
(73) Titulaire: Schrader, 25300 Pontarlier (FR)
(72) Inventeur: GRESSET, Benoit, 39600 Arbois (FR); ROBERT, Sébastien, 25000 Besancon (FR)
(74) Mandataire: Novagraaf Technologies
(86) Numéro de dépôt international: PCT/FR2016/050734
(87) Numéro de publication internationale: WO 2016/174323

(56) Documents cités:
- DE-A1-102007 041 035
- DE-A1-102008 023 296
- DE-C- 86 323
- US-A- 3 379 213

## Description

### Domaine technique

La présente invention concerne une valve soumise à des environnements sous pression, et assimilés tels que valve de charge, clapet anti retour, valve de surpression ou régulateur de pressions.

### Etat de la technique

Les valves connues de ce type comportent un corps tubulaire dans lequel est susceptible de se déplacer axialement une tige à clapet dont la tête est dotée ou non d'une garniture d'étanchéité et adaptée pour coopérer, de façon étanche, avec un siège correspondant du corps de valve, ladite tige agissant en fonction d'une pression prédéterminée, à l'encontre d'un ressort spiral logé dans une chambre coaxiale du corps tubulaire et interposé entre une zone d'appui par rapport à celle-ci et la tige, pour agir en rappel sur cette dernière vers le siège, selon une force prédéterminée.

Pour le bon fonctionnement de ces valves, il est nécessaire d'assurer un certain nombre de fonctions, à savoir : le guidage radial de la tête de clapet ; l'étanchéité initiale et à la refermeture ; une section de passage optimisée ; la répétabilité de la position axiale de la tête de clapet avec le poussoir du connecteur dans le cas de valves de charge ; la possibilité de réglage de la compression initiale du ressort, dans le cas des régulateurs de pression, des valves de suppression et des clapets tarés ; l'arrêt en translation par une butée dans le cas des clapets, des régulateurs de pression, des clapets tarés.

Dans l'art antérieur, ces fonctions sont traditionnellement assurées par l'ajout d'un mécanisme vissé, emmanché à force ou encore clippé par l'arrière de la valve.

Lorsqu'une pression d'ouverture définie est à respecter, c'est le cas des valves de surpression, une vis, un écrou, ou encore une bague emmanchée permettent d'ajuster la force du ressort.

Ceci a pour inconvénient majeur de compliquer le montage en multipliant le nombre de pièces constitutives de la valve,

DE 10 2007 041 035 A1 divulgue une vanne connue comprenant un ressort à spires.

### Description de l'invention

La présente invention a pour but de remédier à ces inconvénients et concerne à cet effet une valve soumise à des environnements sous pression du type comportant un corps tubulaire dans lequel est susceptible de se déplacer axialement une tige à clapet dont la tête est dotée ou non d'une garniture d'étanchéité et adaptée pour coopérer, de façon étanche, avec un siège correspondant du corps de valve, ladite tige agissant en fonction d'une pression prédéterminée, à l'encontre d'un ressort à spires logé dans une chambre à section circulaire, coaxiale du corps tubulaire et interposé entre une zone d'appui située à une première extrémité de la chambre et la tige, pour agir en rappel sur cette dernière vers le siège, selon une force prédéterminée, le ressort de rappel comportant :
- un premier bout comprenant une première grande spire d'un diamètre sensiblement identique à un diamètre de la chambre au niveau de la première extrémité, ladite première grande spire étant agencée de manière à prendre appui sur la zone d'appui, et
- un deuxième bout comportant une petite spire en liaison avec la queue ou la tête de la tige et une deuxième grande spire de centrage et de stabilisation radiale dans ladite chambre, coaxiale avec la petite spire et ayant un diamètre sensiblement identique à un deuxième diamètre de la chambre au niveau d'une deuxième extrémité opposée à la première extrémité de la chambre,
la première extrémité du ressort comprenant une deuxième petite spire coaxiale avec la première grande spire, ladite deuxième petite spire étant en liaison avec la queue ou la tête de la tige.

Selon un mode de réalisation, le ressort de rappel est de forme cylindro-conique, dont la première grande spire constitue la grande base, alors que la petite spire constitue la petite base et se prolonge, de manière coaxiale, par la deuxième grande spire.

Selon une variante de réalisation, cette première extrémité se termine sous forme d'un ressort présentant une portion à spires sensiblement plate qui permet de conférer à cette partie du ressort une fonction de guidage coaxial

Par ressort cylindro-conique, on entend un ressort qui comporte au moins une partie cylindre et une partie conique.

Les essais ont permis de recenser les avantages suivants :
- La section de passage est augmentée du fait de l'utilisation du corps de valve comme corps de mécanisme.
- L'étanchéité est améliorée. Une seule zone d'étanchéité au lieu de deux (plus de joint de siège).
- Le process d'assemblage est simplifié au maximum. Il suffit de clipper ou de visser le clapet dans le ressort, donc pas de sertissage, pas d'assemblage intermédiaire.
- Une propreté permettant de répondre aux spécifications sévères.
- Dans le cas de valves de charge, le dépassement d'épingle est mieux maîtrisé (la chaîne de cotes est moins longue) et le risque que la broche échappe le poussoir du connecteur est réduit (guidage radial continu de la tête de broche par des spires internes et/ou externes du ressort).
- Dans le cas de valves de surpression ou de clapets tarés, le vissage de la broche du clapet dans le ressort permet de calibrer, sans ajouter de pièces, pour corriger les variations de force des ressorts.

### Brève description des figures

L'invention concerne également les caractéristiques qui ressortiront au cours de la description qui va suivre et qui devront être considérées isolément ou selon toutes leurs combinaisons techniques possibles.

Cette description donnée à titre d'exemple non limitatif fera mieux comprendre comment l'invention peut être réalisée en référence aux dessins annexés sur lesquels :
- La figure 1 est une vue schématique en coupe axiale d'une valve ne faisant pas partie de l'invention, selon un premier mode de réalisation.
- La figure 2 est une vue en plan de la tige à clapet, selon la réalisation de la figure 1.
- La figure 3 est une vue schématique en coupe axiale d'une valve ne faisant pas partie de l'invention, selon un second mode de réalisation.
- La figure 4 est une vue en plan de la tige à clapet, selon la réalisation de la figure 3.
- La figure 5 est une vue schématique en coupe axiale d'une valve ne faisant pas partie de l'invention, selon un troisième mode de réalisation.
- La figure 6 est une vue en perspective du ressort de rappel selon une première variante de réalisation du ressort ne faisant pas partie de l'invention.
- La figure 7 est une vue en plan du ressort selon la figure 6, vu en perspective.
- La figure 8 est une vue en bout du ressort selon la figure 7.
- La figure 9 est une vue en coupe axiale du ressort selon la ligne IX-IX de la figure 8.
- La figure 10 est une vue schématique en coupe d'une valve selon l'invention, selon un quatrième mode de réalisation.
- La figure 11 est une vue schématique en coupe d'une valve selon l'invention, selon un cinquième mode de réalisation.
- La figure 12 est une vue en perspective du ressort de l'invention.

### DESCRIPTION DETAILLEE

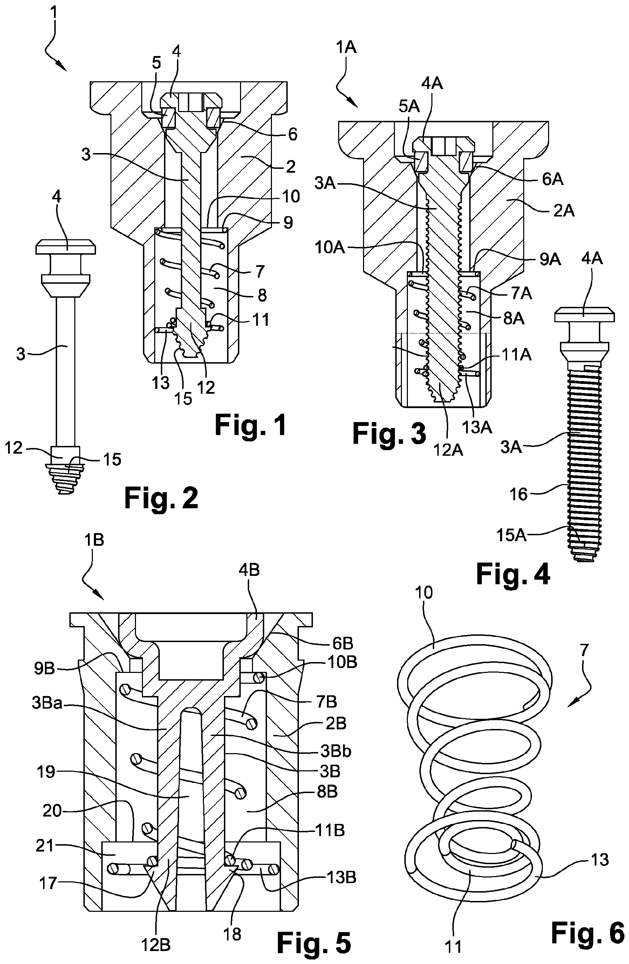

La valve 1 globalement désignée sur la figure 1 comporte un corps tubulaire 2 dans lequel est susceptible de se déplacer axialement une tige à clapet 3 dont la tête 4 est dotée ou non d'une garniture d'étanchéité 5 et adaptée pour coopérer, de façon étanche, avec un siège 6 correspondant du corps de valve 2, ladite tige 3 agissant en fonction d'une pression prédéterminée, à rencontre d'un ressort à spires 7, 7A, 7B par exemple de forme partiellement conique 7 logé dans une chambre 8 à section circulaire, coaxiale du corps tubulaire 2 et interposé entre une zone d'appui 9 par rapport à celle-ci et la tige 3, pour agir en rappel sur cette dernière vers le siège 6, selon une force prédéterminée.

Selon une réalisation ne faisant pas partie de l'invention, le ressort de rappel 7,7A,7B est de forme cylindro-conique, dont la spire constituant sa grande base 10, 10A, 10B est destinée à prendre appui sur la zone d'appui 9,9A,9B de la chambre 8,8A,8B du corps 2,2A, 2B de valve 1, alors que la spire 11, 11A, 11B constituant sa petite base est en liaison avec la queue 12, 12A, 12B de tige 3,3A,3B et se prolonge concentriquement par une spire élargie 13,13A,13B de centrage et de stabilisation radiale dans ladite chambre 8,8A,8B, d'un diamètre sensiblement identique à celle-ci.

Selon une autre caractéristique, la chambre 8,8A,8B du corps 2,2A,2B dans laquelle est logé le ressort cylindro-conique 7,7A,7B forme un logement présentant un épaulement coaxiale 9,9A,9B, de diamètre sensiblement plus petit que celui de la grande base 10,10A,10B du ressort 7,7A,7B, pour constituer sa zone d'appui fixe, tout en centrant ladite base dans la chambre 8,8A,8B.

Selon une autre caractéristique, l'extrémité de la spire élargie 13, 13A, 13B retourne vers l'axe. Ainsi, lorsque la spire élargie est logée dans la chambre, son extrémité, qui peut être agressive, est éloignée de la paroi de la chambre, ce qui la préserve d'agressions qui pourraient freiner le mouvement, rayer la chambre ou générer des copeaux compromettant la propreté du fluide.

Selon l'exemple de réalisation des figures 1 et 2, la liaison entre la queue 12,12A de la tige 3,3A à clapet 4,4A et la spire d'extrémité constituant la petite base 11,11A du ressort cylindro-conique 7,7A est effectuée par une zone d'extrémité conique et filetée 15,15A de ladite queue 12,12A, de dimensions telles à permettre son vissage ou clipage dans la spire d'extrémité du ressort constituant sa petite base 11,11A, jouant un rôle de filet hélicoïdal ou de circlips.

L'exemple de réalisation représenté sur les figures 3 et 4 diffère essentiellement du précédent en ce que la zone d'extrémité conique et filetée 15A de la tige 3A du clapet 4A se prolonge par une zone cylindrique filetée le long de laquelle peut être vissée la spire d'extrémité du ressort constituant sa petite base 11, de manière à permettre le réglage de la force du ressort 7A de celui-ci ou de la pression d'ouverture du clapet 4A.

Selon un exemple de réalisation non représenté, la liaison entre la queue 12 de la tige 3 de clapet et la spire d'extrémité constituant la petite base 11 du ressort cylindro-conique 7 est effectuée par déformation mécanique de l'extrémité de la queue 12 de la tige 3, selon un diamètre supérieur à la petite base du ressort 7.

Selon l'exemple de réalisation représenté à la figure 5, celui-ci diffère des précédents en ce que la liaison entre la queue de la tige 12B de clapet et la spire d'extrémité constituant la petite base 11B du ressort cylindro-conique est effectuée par deux becquets 17,18 s'inscrivant dans un cône ou tronc de cône réalisés aux extrémités de deux bras 3Ba, 3Bb formant la tige 3, séparés par une fente longitudinale 19, de manière à les rendre élastiquement déformable et permettre le montage ou le démontage, par rapport à la petite base 11B du ressort 7B.

Selon une variante de réalisation, la fente longitudinale 19 peut ne pas être présente dans le cône ou tronc de cône, le montage du ressort 7B pouvant être effectué par écartement ou déformation élastique des spires du ressort 7B.

Selon ce mode de réalisation, la chambre 8B du corps 2B dans laquelle est logé le ressort cylindro-conique 7B est prolongée par une seconde chambre 21 plus large que celle 8B et définit un second épaulement coaxial 20, de diamètre sensiblement plus petit que celui de la spire élargie 13B, prolongeant la spire constituant la petite base du ressort 11B, de manière à contrôler la course axiale de la tige 3B de clapet, selon une plage prédéterminée, tout en assurant son centrage et sa stabilisation radiale.

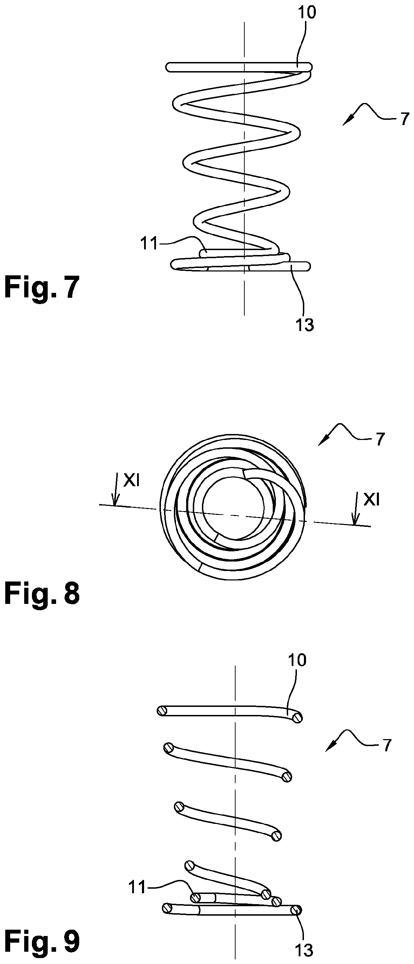

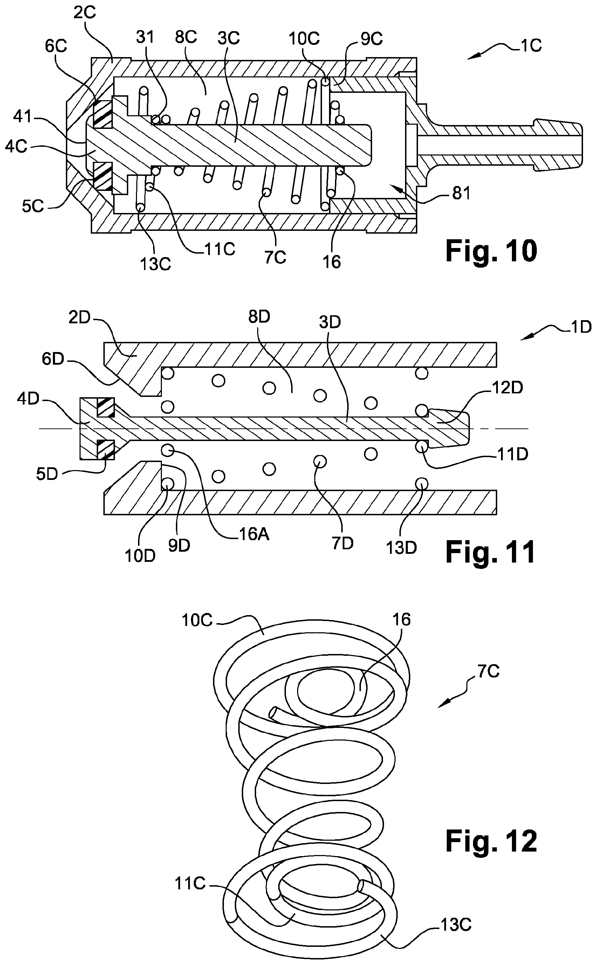

Dans les exemples de réalisation selon l'invention représentés par les figures 10 et 11 le ressort de rappel 7C; 7D est de la forme représentée par la figure 12. Ce ressort 7C; 7D diffère du ressort représenté aux figures 6 à 9 par le fait que la grande spire 10C;10 D constituant sa grande base se prolonge par une deuxième petite spire 16; 16A. Dans cet exemple, la deuxième petite spire 16; 16A a un diamètre sensiblement identique au diamètre de la petite spire 11C; 11D formant la petite base.

Dans d'autres variantes de réalisation, non représentées, la deuxième petite spire 16 a un diamètre différent du diamètre de la petite spire 11 formant la petite base.

Dans l'exemple de réalisation de la figure 10, la tige à clapet 3C est agencée de manière à pouvoir se déplacer axialement dans la chambre 8C. Le ressort 7C agit en rappel sur la tige au niveau de la tête. Pour ce faire, la grande base 10C du ressort 7C est en appui contre l'épaulement 9C et la petite spire 11C est en appui sur un deuxième épaulement 31 formé sur la tige 3C près de la tête 4C. L'action du ressort 7C sur la tige permet de plaquer la paroi extérieure 41 de la tête contre le siège 6C, plus précisément, c'est la garniture d'étanchéité 5C qui rentre en contact du siège 6C, pour assurer une meilleure étanchéité.

En fonctionnement, lorsque la valve 1C est soumise à une pression dépassant un certain seuil prédéterminé, la tige 3C est poussée vers une extrémité 81 de la chambre 8C. Lors de son coulissement, la deuxième petite spire 16 lui sert de guide, ce qui permet d'assurer le centrage coaxial de la tige. Par la suite, la tige revient à sa position initiale lorsque la pression est de nouveau en dessous du seuil prédéterminé.

Dans l'exemple de réalisation de la figure 11, la forme générale de valve 1D est semblable à celle de la figure 1. La tige à clapet 3D est agencée de manière à pouvoir se déplacer axialement dans la chambre 8D et le ressort 7D agit en rappel sur la tige au niveau de la queue pour la ramener vers la position de fermeture.

La grande base 10D du ressort 7D est en appui contre l'épaulement 9D et la petite spire 11D et en appui sur un deuxième épaulement formé sur la tige 3D au niveau de la queue 12D.

L'action du ressort 7D en rappel sur la tige 3D permet de plaquer la tête 4D et la garniture d'étanchéité 5D contre le siège 6D.

Dans ces deux derniers exemples de réalisation, la deuxième petite spire 16, 16A sert de spire de guidage et stabilisation de la queue ou tête de la tige.

Ces deux derniers exemples de réalisation présentent l'avantage d'avoir un double guidage de la tige qui assure une fermeture du clapet dans une position de coaxialité. Cela permet également d'avoir un guidage sans risque d'arcboutement grâce au double centrage par les petites spires.

La pression d'ouverture peut être calibrée par ajustement de la position de la retenue du ressort sur le corps, notamment par la maîtrise des positions des épaulements.

Selon un mode de réalisation, la chambre est de forme cylindrique.

Dans les exemples de réalisation présentés ci-dessus, le ressort est de forme cylindro-conique, cependant ces exemples de réalisation ne sont pas limitatifs et le ressort peut présenter une forme différente.

Selon une dernière caractéristique, l'extrémité de la deuxième petite spire 16 s'éloigne de l'axe. Ainsi, lorsque l'un de la queue 12D ou la tête 4C, 4D de la tige 3C, 3D coulisse dans cette petite spire (16), selon une variante de réalisation non illustré ici, son extrémité qui peut être agressive est éloignée de la paroi de tige, ce qui la préserve d'agressions qui pourraient freiner le mouvement, rayer la tige ou générer des copeaux compromettant la propreté du fluide.

## Revendications

1. Valve (1C, 1D) soumise à des environnements sous pression du type comportant un corps tubulaire (2C, 2D) dans lequel est susceptible de se déplacer axialement une tige à clapet (3C, 3D) dont la tête (4C,4D) est dotée ou non d'une garniture d'étanchéité (5C, 5D) et adaptée pour coopérer, de façon étanche, avec un siège (6C, 6D) correspondant du corps de valve (2C, 2D), ladite tige agissant en fonction d'une pression prédéterminée, à l'encontre d'un ressort à spires (7C, 7D) logé dans une chambre (8C, 8D) à section circulaire, coaxiale du corps tubulaire et interposé entre une zone d'appui (9C, 9D) située à une première extrémité de la chambre et la tige (3C, 3D), pour agir en rappel sur cette dernière vers le siège (6C, 6D), selon une force prédéterminée, le ressort de rappel (7C, 7D) comportant :
- un premier bout comprenant une première grande spire (10C, 10D) d'un diamètre sensiblement identique à un diamètre de la chambre au niveau de la première extrémité, ladite première grande spire étant agencée de manière à prendre appui sur la zone d'appui (9C, 9D), et
- un deuxième bout comportant une petite spire (11C, 11D) en liaison avec la queue (12D) ou la tête de la tige et une deuxième grande spire (13C, 13D) de centrage
et de stabilisation radiale dans ladite chambre (8C, 8D), coaxiale avec la petite spire (11C, 11D) et ayant un diamètre sensiblement identique à un deuxième diamètre de la chambre au niveau d'une deuxième extrémité opposée à la première extrémité de la chambre, **caractérisée en ce que** la première extrémité du ressort (7C, 7D) comprend une deuxième petite spire (16, 16A) coaxiale avec la première grande spire (10C, 10D), ladite deuxième petite spire (16, 16A) étant en liaison avec la queue (12D) ou la tête (4C, 4D) de la tige.

2. Valve selon la revendication 1, **caractérisée en ce que** le ressort de rappel (7C, 7D) est de forme cylindro-conique, dont la première grande spire constitue une grande base, alors que la petite spire constitue une petite base et se prolonge, de manière coaxiale, par la deuxième grande spire.

3. Valve selon la revendication 2, **caractérisée en ce que** la chambre (8C, 8D) du corps (2C, 2D) dans laquelle est logé le ressort cylindro-conique forme un logement présentant un épaulement coaxial (9C, 9D), de diamètre sensiblement identique à celui de la grande base du ressort, pour constituer sa zone d'appui fixe, tout en centrant ladite base dans la chambre.

4. Valve selon l'une des revendications 2 ou 3, **caractérisée en ce que** la liaison entre la queue de la tige à clapet et la petite spire du ressort cylindro-conique est effectuée par une zone d'extrémité conique et filetée de ladite queue, de dimensions telles à permettre son vissage ou clipage dans la petite spire, jouant un rôle de filet hélicoïdal ou de circlips.

5. Valve selon les revendications 2 ou 3, **caractérisée en ce que** la liaison entre la queue de la tige à clapet et la petite spire du ressort cylindro-conique est effectuée par déformation mécanique de l'extrémité de la queue de la tige, selon un diamètre supérieur à la petite base du ressort.

6. Valve selon les revendications 2 ou 3, **caractérisée en ce que** la liaison entre la queue de la tige de clapet et la petite spire du ressort cylindro-conique est effectuée par deux becquets s'inscrivant dans un cône ou tronc de cône réalisés aux extrémités de deux bras formant la tige, séparés par une fente longitudinale, de manière à les rendre élastiquement déformable et permettre le montage ou le démontage, par rapport à la petite base du ressort.

7. Valve selon les revendications 3, 5, ou 6, **caractérisée en ce que** la chambre du corps dans laquelle est logé le ressort cylindro-conique est prolongée par une seconde chambre plus large que celle-ci et définit un second épaulement coaxiale, de diamètre sensiblement plus petit que celui de la première grande spire, prolongeant la petite spire, (110), de manière à contrôler la course axiale de la tige de clapet, selon une plage prédéterminée, tout en assurant son centrage et sa stabilisation radiale.

8. Valve selon l'une des revendications précédentes, **caractérisée en ce que** l'extrémité de la deuxième grande spire retourne vers son axe.

9. Valve selon l'une des revendications précédentes, **caractérisée en ce que** l'extrémité de la deuxième petite spire (16, 16A) s'éloigne de son axe.

## Patentansprüche

1. Ventil (1C, 1D), das Umgebungen unter Druck unterliegt, vom Typ, der einen röhrenförmigen Körper (2C, 2D) umfasst, in dem sich axial eine Ventilstange (3C, 3D) verlagern kann, deren Kopf (4C, 4D) mit einer Dichtung (5C, 5D) versehen ist oder nicht und angepasst ist, um auf dichte Art mit einem Sitz (6C, 6D) zusammenzuwirken, der dem Ventilkörper (2C, 2D) entspricht, wobei die Stange in Abhängigkeit von einem vorbestimmten Druck gegen eine Feder mit Windung (7C, 7D) wirkt, die in einer Kammer (8C, 8D) mit kreisförmigem Querschnitt koaxial zu dem röhrenförmigen Körper aufgenommen und zwischen einer Auflagezone (9C, 9D), die an einem ersten Ende der Kammer liegt, und der Stange (3C, 3D) eingefügt ist, um in Rückstellung auf diese Letztere zu dem Sitz (6C, 6D) gemäß einer vorbestimmten Kraft einzuwirken, wobei die Rückstellfeder (7C, 7D) Folgendes umfasst:
- ein erstes Stück, das eine erste große Windung (10C, 10D) mit einem Durchmesser im Wesentlichen identisch mit einem Durchmesser der Kammer im Bereich des ersten Endes umfasst, wobei die erste große Windung derart eingerichtet ist, dass sie auf der Auflagezone (9C, 9D) aufliegt, und
- ein zweites Stück, das eine kleine Windung (11C, 11D) in Verbindung mit dem Endstück (12D) oder dem Kopf der Stange umfasst, und eine zweite große Windung (13C, 13D) zum Zentrieren und radialen Stabilisieren in der Kammer (8C, 8D), koaxial zu der kleinen Windung (11C, 11D) und mit einem Durchmesser im Wesentlichen identisch mit einem zweiten Durchmesser der Kammer im Bereich eines zweiten Endes, das dem ersten Ende der Kammer entgegengesetzt ist, **dadurch gekennzeichnet, dass** das erste Ende der Feder (7C, 7D) eine zweite kleine Windung (16, 16A) koaxial zu der ersten großen Windung (10C, 10D) umfasst, wobei die zweite kleine Windung (16, 16A) mit dem Endstück (12D) oder dem Kopf (4C, 4D) der Stange in Verbindung ist.

2. Ventil nach Anspruch 1, **dadurch gekennzeichnet, dass** die Rückstellfeder (7C, 7D) zylindrisch-konische Form aufweist, von der die erste große Windung eine große Basis bildet, während die kleine Windung eine kleine Basis bildet und sich auf koaxiale Art durch die zweite große Windung verlängert.

3. Ventil nach Anspruch 2, **dadurch gekennzeichnet, dass** die Kammer (8C, 8D) des Körpers (2C, 2D), in der die zylindrisch-konische Feder aufgenommen ist, eine Aufnahme bildet, die eine koaxiale Schulter (9C, 9D) mit einem Durchmesser im Wesentlichen identisch mit dem der großen Basis der Feder aufweist, um ihre stationäre Auflagezone zu bilden, während gleichzeitig die Basis in der Kammer zentriert wird.

4. Ventil nach einem der Ansprüche 2 oder 3, **dadurch gekennzeichnet, dass** die Verbindung zwischen dem Endstück der Ventilstange und der kleinen Windung der zylindrisch-konischen Feder durch eine konische Endzone und Gewindeschnitt des Endstücks mit Maßen derart ausgeführt ist, dass ihr Schrauben oder Clipsen in die kleine Windung erlaubt wird, die eine Aufgabe eines Schraubengewindes oder Circlips erfüllt.

5. Ventil nach den Ansprüchen 2 oder 3, **dadurch gekennzeichnet, dass** die Verbindung zwischen dem Endstück der Ventilstange und der kleinen Windung der zylindrisch-konischen Feder durch mechanisches Verformen des Endes des Endstücks der Stange gemäß einem Durchmesser erfolgt, der größer ist als die kleine Basis der Feder.

6. Ventil nach den Ansprüchen 2 oder 3, **dadurch gekennzeichnet, dass** die Verbindung zwischen dem Endstück der Ventilstange und der kleinen Windung der zylindrisch-konischen Feder durch zwei Spoiler erfolgt, die in einen Kegel oder Kegelstumpf fallen, der an den Enden von zwei Armen hergestellt ist, die die Stange bilden, die durch einen Längsschlitz derart getrennt sind, dass sie elastisch verformbar gemacht werden und die Montage oder Demontage der Feder bezüglich der kleinen Basis erlauben.

7. Ventil nach den Ansprüchen 3, 5 oder 6, **dadurch gekennzeichnet, dass** die Kammer des Körpers, in der die zylindrisch-konische Feder aufgenommen ist, durch eine zweite Kammer, die größer ist als diese, verlängert wird, und eine zweite koaxiale Schulter mit einem Durchmesser im Wesentlichen kleiner als der der ersten großen Windung definiert, die die kleine Windung derart verlängert, dass der axiale Hub der Ventilstange gemäß einem vorbestimmten Bereich gesteuert wird, während gleichzeitig ihr Zentrieren und ihre radiale Stabilisation sichergestellt werden.

8. Ventil nach einem der vorstehenden Ansprüche, **dadurch gekennzeichnet, dass** das Ende der zweiten großen Windung zu ihrer Achse zurückkehrt.

9. Ventil nach einem der vorstehenden Ansprüche, **dadurch gekennzeichnet, dass** sich das Ende der kleinen Windung (16, 16A) von ihrer Achse entfernt.

## Claims

1. Valve (1C, 1D) subjected to pressurised environments of the type comprising a tubular body (2C, 2D) wherein a valve rod (3C, 3D) is likely to be axially moved, of which the head (4C, 4D) is equipped (or not) with a seal (5C, 5D) and adapted to engage, in a sealing manner, with a corresponding seat (6C, 6D) of the valve body (2C, 2D), said rod acting according to a predetermined pressure, against a spiral spring (7C, 7D) housed in a chamber (8C, 8D) with a circular cross-section, coaxial from the tubular body and inserted between a supporting zone (9C, 9D) located at a first end of the chamber and the rod (3C, 3D) to act as a spring on the latter towards the seat (6C, 6D), according to a predetermined force, the counter spring (7C, 7D) comprising:
- a first end comprising a first large spire (10C, 10D) with a diameter substantially identical to a diameter of the chamber at the level of the first end, said first large spiral being arranged to as to bear onto the supporting zone (9C, 9D), and
- a second end comprising a small spire (11C, 11D) connected to the tail or the head of the rod and a second large radially centring and stabilising spire (13C, 13D) in said chamber, coaxial with the small spire (11C, 11D) and having a diameter substantially identical to a second diameter of the chamber at the level of a second end opposite the first end of the chamber, **characterised in that** the first end of the spring (7C, 7D) comprises a second small spire (16, 16A), coaxial with the first large spire (10C, 10D), said second small spire (16, 16A) being connected to the tail (12D) or the head (4C, 4D) of the rod.

2. Valve according to claim 1, **characterised in that** the counter spring (7C, 7D) is a cylindroconical shape, of which the first large spire constitutes a large base, while the small spire constitutes a small base and extends, coaxially, through the second large spire.

3. Valve according to claim 2, **characterised in that** the chamber (8C, 8D) of the body (2C, 2D) wherein is housed the cylindroconical spring forms a housing having a coaxial shoulder (9C, 9D), with a diameter, substantially identical to that of the large base of the spring, to constitute the fixed supporting zone thereof, while centring said base in the chamber.

4. Valve according to any one of claims 2 or 3, **characterised in that** the connection between the tail of the valve rod and the small spire of the cylindroconical spring is made by a conical and tapered end zone of said tail of such dimensions to make it possible for the screwing or clipping thereof in the small spire, playing a role of helical thread or snap ring.

5. Valve according to claims 2 or 3, **characterised in that** the connection between the tail of the valve rod and the small spire of the cylindroconical spring is made by mechanical deformation of the end of the tail of the rod, according to a diameter greater than the small base of the spring.

6. Valve according to claims 2 or 3, **characterised in that** the connection between the tail of the valve rod and the small spire of the cylindroconical spring is made by two spoilers falling within a cone or cone frustum made at the ends of two arms forming the rod, separated by a longitudinal slot, so as to make them elastically deformable and make it possible for the mounting or the dismounting, with respect to the small base of the spring.

7. Valve according to claims 3, 5 or 6, **characterised in that** the chamber of the body wherein is housed the cylindroconical spring, which is extended by a second chamber, wider than this, and defines a second coaxial shoulder, with a diameter, substantially smaller than that of the first large spire, extending the small spire, so as to control the axial course of the valve rod, according to a predetermined range, while ensuring the centring thereof and the radial stabilisation thereof.

8. Valve according to one of the preceding claims, **characterised in that** the end of the second large spire returns to the axis thereof.

9. Valve according to one of the preceding claims, **characterised in that** the end of the second small spire (16, 16A) is extended from the axis thereof.
